# EUROPÄISCHE PATENTANMELDUNG

(11) **EP 1 419 840 A1**
(43) Veröffentlichungstag der Anmeldung: **19.05.2004**
(21) Anmeldenummer: 02025761.4
(22) Anmeldetag: 15.11.2002
(51) Int. Cl.: B23D 1/00, B23K 26/42, B23K 26/26, B23Q 1/48, B23K 26/08

(54) **Vorrichtung zum Bearbeiten, insbesondere Schaben der Ränder von Bandmaterial sowie Verfahren zum Laserschweissen**

(71) Anmelder: ARKU MASCHINENBAU GMBH, 76532 Baden-Baden (DE)
(72) Erfinder: Decker, Johannes, 76571 Gaggenau/Rotenfels (DE); Kaupp, Peter, 71069 Sindelfingen (DE); Heck Peter, 71272 Renningen (DE); Kummle, Ralf, 79650 Schopfheim (DE)
(74) Vertreter: Strobel, Wolfgang, Dipl.-Ing.

(57) **Zusammenfassung**

Die vorliegende Erfindung betrifft eine Vorrichtung zum Bearbeiten, insbesondere Schaben der Ränder von insbesondere gewalztem und von wenigstens einem Coil abgewickelten Bandmaterial (17) insbesondere für die Erzeugung einer für ein Laserschweißen geeigneten Bandkante, mit einem Querträger (3) und je einem an jedem Ende des Querträgers (3) angeordneten seitlichen Stützträger (5), wobei der Querträger (3) eine lineare Schlittenführung (13, 15) zum linearen Führen von wenigstens einem Werkzeugschlitten (11) aufweist, wobei der wenigstens eine Werkzeugschlitten (11) eine Werkzeugaufnahmeeinrichtung (19) aufweist, die zur Halterung eines Werkzeugträgers (21) dient, und mit einer Bandführung (43) auf der Bandmaterialeinlaufseite und einer Bandführung (41) auf der Bandmaterialauslaufseite, wobei das Werkzeug eine Schneidplatte (23) ist, und wobei der Werkzeugträger (21) zusammen mit dem Werkzeug linear und während des Betriebs bewegbar ist.

## Beschreibung

Die vorliegende Erfindung betrifft eine Vorrichtung zum Bearbeiten, insbesondere Schaben der Ränder von, insbesondere gewalztem und von wenigstens einem Coil abgewickelten, Bandmaterial, insbesondere für die Erzeugung einer für ein Laserschweißen geeigneten Bandkante.

Weiterhin betrifft die vorliegende Erfindung ein Verfahren zum Laserschweißen von bandförmigem Material gleicher oder unterschiedlicher Dicke.

Es sind Vorrichtungen bzw. Maschinen zum Bearbeiten der Ränder von Bandmaterial bekannt, bei denen ein Werkzeugstahl durch spanende Bearbeitung beim Vorbeiführen des Bandmaterials die Kanten des Bandmaterials entsprechend bearbeitet. Dabei können unterschiedlichste Profile an den Seitenrändern des Bandes erzeugt werden. Neben dem geraden Bearbeiten der Ränder des Bandmaterials werden insbesondere als Vorbereitung für das Schweißen von Rohren die Kanten des Bandmaterials winkelig bearbeitet, wobei nach Umformen des Bandmaterials in Rohrform eine "I"-Naht gebildet sein soll, in der dann eine entsprechende Schweißnaht erzeugt wird.

Die Einstellvorgänge der Vorrichtungen des Standes der Technik für den Schneidstahl sind zweiachsig. Insbesondere bei winkeliger Bearbeitung muss immer zuerst in horizontaler Richtung und danach in vertikaler Richtung der Schneidstahl neu justiert werden. Dies führt zu Bearbeitungsunterbrechungen und die Einstellung selbst ist nicht nur sehr zeitaufwendig sondern erfordert auch viel Erfahrung und Geschick.

Der vorliegenden Erfindung liegt deshalb die Aufgabe zugrunde, eine Vorrichtung zum Bearbeiten, insbesondere Schaben der Ränder von, insbesondere gewalztem und von wenigstens einem Coil abgewickelten, Bandmaterial zu schaffen, mit der die o. g. Nachteile des Standes der Technik überwunden werden und mit der eine einfache Einstellung der Schneidplatte ermöglicht wird.

Weiterhin liegt der vorliegenden Erfindung die Aufgabe zugrunde, ein verbessertes Verfahren zum Laserschweißen von bandförmigem Material gleicher oder unterschiedlicher Dicke anzugeben.

Diese Aufgaben werden durch die Merkmale der Ansprüche 1 bzw. 18 gelöst.

Erfindungsgemäß weist die Vorrichtung zum Bearbeiten der Ränder von Bandmaterial, insbesondere für die Erzeugung einer für ein Laserschweißen geeigneten Bandkante einen Querträger und je einen an jedem Ende des Querträgers angeordneten seitlichen Stützträger auf, wobei der Querträger eine lineare Schlittenführung zum linearen Führen von wenigstens einem Werkzeugschlitten aufweist, wobei der wenigstens eine Werkzeugschlitten eine Werkzeugaufnahmeeinrichtung aufweist, die zur Halterung eines Werkzeugträgers dient. Weiterhin weist die erfindungsgemäße Vorrichtung eine Bandführung auf der Bandmaterialeinlaufseite und eine Bandführung auf der Bandmaterialauslaufseite auf, wobei das Werkzeug eine Schneidplatte ist, und wobei der Werkzeugträger zusammen mit dem Werkzeug linear und während des Betriebes bewegbar ist.

Damit wird mit besonderem Vorteil erreicht, dass während des Bearbeitungsvorgangs des Seitenrandes bzw. der Seitenränder von Bandmaterial die Schneidplatte bewegt werden kann, und damit der verbrauchte Abschnitt der Schneidplatte außer Eingriff mit dem Werkstück gebracht werden kann und ein unverbrauchter Abschnitt der Schneidplatte in Eingriff mit dem Werkstück gebracht werden kann. Dabei ist keine Unterbrechung des Bearbeitungsvorganges notwendig und entfällt jegliche Art einer neuen Justierung während des Bearbeitungsvorgangs. Insbesondere beim winkeligen Bearbeiten des Seitenrandes des Bandmaterials entfällt eine zweiachsige Justierung des Schneidstahls, und die notwendige Einstellung wird durch ein lineares Verschieben der Schneidkante des Werkzeugstahls verwirklicht.

Die erfindungsgemäße Bandschabevorrichtung weist vorteilhafterweise zwei Werkzeugschlitten mit Werkzeugaufnahmeeinrichtung, Werkzeugträger und Werkzeug auf, so dass in einem Arbeitsschritt beide Seitenränder des Bandmaterials bearbeitet werden können, beispielsweise zur Erzeugung von Seitenrändern, wenn das Bandmaterial zu einem längsgeschweißten Rohr umgebildet wird.

Weiterhin sind vorteilhafterweise die beiden Werkzeugaufnahmeeinrichtungen auf einer Achse angeordnet, diese senkrecht zur Bandmaterial-Förderrichtung verläuft. Hierdurch wird eine optimale Bearbeitungsstellung erzeugt, insbesondere eine optimale Krafteinleitung in das Werkstück.

Mit besonderem Vorteil wird eine äusserst einfache Einstellung des Schabwinkels dadurch erreicht, dass die Werkzeugaufnahmeeinrichtungen jeweils um eine Achse verschwenkbar sind, die parallel zur Bandmaterial-Fördereinrichtung verlaufen. Durch Schwenken der Werkzeugaufnahmeeinrichtungen werden gleichzeitig Werkzeugträger und darin aufgenommener Schneidstahl geschwenkt, wodurch sogar eine Winkeländerung des Werkzeugstahls während der Bearbeitung des Bandmaterials möglich ist.

Der Bearbeitungsvorgang der Seitenränder des Bandmaterials wird hier mit "Schaben" bezeichnet. Mit diesem Begriff soll ausgedrückt werden, dass nur eine geringe Materialabspanung in der Größenordnung von einem bis mehreren Zehntel Millimeter erfolgt, wobei trotzdem erhebliche Spankräfte auf das Bandmaterial wirken. Um die Maßhaltigkeit der Abspannung sicherzustellen, weist die erfindungsgemäße Abschabevorrichtung wenigstens eine drehbare Seitenführungsrolle je Bandmaterialseite auf, die gegen den bearbeiteten Seitenrand drückt. Vorteilhafterweise ist die Seitenführungsrolle in der Nähe der Eingriffsstelle des Werkzeugs angeordnet.

Eine besonders einfache und exakte Feinjustierung der Seitenführung des Bandmaterials wird dadurch erreicht, dass die Seitenführungsrolle exzentrisch angeordnet bzw. gelagert ist. Dadurch kann eine besonders genaue und kontinuierliche Feinjustierung erfolgen.

Zur Verwirklichung einer guten Seitenführung des Bandmaterials weist die erfindungsgemäße Bandschabevorrichtung eine Bandführung auf der Bandmaterialeinlaufseite auf, die aus wenigstens einer drehbaren Führungsrolle je Seite ausgebildet ist, die gegen den unbearbeiteten Seitenrand des Bandmaterials drücken.

Weiterhin weist die erfindungsgemäße Bandschabevorrichtung zur Führung des Bandmaterials im Bearbeitungsbereich wenigstens ein drehbares Rollenpaar auf, wobei sich das Bandmaterial zwischen den Rollen hindurch bewegt. Der Zwischenraum zwischen den Rollen ist auf die Materialdicke des Bandmaterials einstellbar.

Aufgrund der auf das Bandmaterial einwirkenden Spankräfte besteht die Gefahr, dass sich das Bandmaterial aufwölbt. Um dies zu verhindern ist auf der Bandeinlaufseite eine Mehrzahl von drehbaren Führungsrollenpaaren vorgesehen, wobei sich das Bandmaterial zwischen den Rollen eines jeden Führungsrollenpaares bewegt. Die Anzahl der Führungsrollenpaare hängt im Wesentlichen von der Breite des Bandmaterials ab.

Vorteilhafterweise ist zur Aufnahme der auf jede Rolle eines Führungsrollenpaares wirkenden Kraft, jede Rolle abgestützt.

In der modernen Werkstofftechnik, beispielsweise im Automobilbau, wird zunehmend die Herstellung von Materialteilen gefordert, die aus verschiedenen Werkstoffen, sogenannten "Tailored Blanks" gebildet sind. Gerade für die Herstellung derartiger Materialzusammensetzungen ist die vorliegende Bandschabevorrichtung geeignet. Dabei werden unterschiedliche Materialien zu sogenannten "Tailored Strips" zusammengeschweißt, aus denen dann die Tailored Blanks gebildet werden.

Im Ausgangszustand vor Bearbeitung liegt das Bandmaterial üblicherweise in Form eines Coils vor, also in Form eines gewalzten und auf eine Haspel aufgewickelten Bandstahls. Um ein kontinuierliches Arbeiten der gesamten Laserschweißanlage, in der die Bandschabeeinrichtung eine Bearbeitungsstation ist, zu gewährleisten, werden das Ende des einen Coils mit dem Anfang des nächsten Coils verbunden, wodurch aufwendige Einführarbeiten des Materials des nächsten Coils vermieden werden. Dabei können sich jedoch die Bandbreiten des Bandmaterials geringfügig ändern. Außerdem wäre der Aufwand beim Zusammenfügen, beispielsweise Zusammenschweißen, des Endes des vorhergehenden Bandmaterials mit dem Beginn des nachfolgenden Bandmaterials auf eine Maßgenauigkeit beispielsweise von 0,1 mm im laufenden Betrieb nicht vertretbar, so dass trotz gleicher oder im wesentlichen gleicher Bandbreite ein geringer Versatz der beiden zusammengefügten Bandmaterialien auftreten kann.

Zur Vermeidung von Beschädigungen des oder der Werkzeuge der erfindungsgemäßen Bandschabevorrichtung ist vorgesehen, dass jeder Werkzeugschlitten lüftbar ist. Vorteilhafterweise wird das Lüften des bzw. der Werkzeugschlitten durch gegenläufige hydraulische Beaufschlagung erzeugt. Mit anderen Worten, jeder Werkzeugschlitten wird schlagartig ausser Eingriff mit dem Bandmaterial gebracht und nach Einführen des neuen Bandmaterials werden die Werkzeuge wieder in Eingriff mit den Seitenrändern des neuen Bandmaterials gebracht.

Weiterhin haben sich im Rahmen der modernen Metallverarbeitung auch Forderungen dahingehend herausgebildet, dass die Tailored Blanks nicht nur Materialien unterschiedlicher Zusammensetzung sondern auch unterschiedlicher Dicke aufweisen sollen. Auch können sich Dickenunterschiede zwischen zwei aufeinanderfolgenden zusammengefügten Bandmaterialien unterschiedlicher Coils ergeben. Vorteilhafterweise ist deshalb wenigstens eine der beiden Rollen eines Führungsrollenpaares lüftbar angeordnet. Dies kann beispielsweise ebenfalls durch gegenläufige hydraulische Beaufschlagung erfolgen, so dass eine der Führungsrollen beim Herannahen des dickeren Materials schlagartig von der Bandlaufebene entfernt werden und anschließend wieder gegen das neue Material gedrückt werden kann. Vorteilhafterweise wird die obere Rolle des Führungsrollenpaares gelüftet.

Im Betrieb der erfindungsgemäßen Bandschabevorrichtung treten Vibrationen auf. Um die Einstellungen des Werkzeugs und der Führungseinrichtungen des Bandmaterials sicherzustellen weist die erfindungsgemäße Bandschabevorrichtung Einrichtungen auf, mit denen alle Verstellungen klemmbar sind. Damit wird sichergestellt, dass die auf das jeweilige Bandmaterial eingestellten Werkzeuge und Führungseinrichtungen die auftretenden Kräfte aufnehmen können und die Maßhaltigkeit der Bearbeitung gewährleistet wird. Für das Verstellen des Werkzeugs im Betrieb können die entsprechenden Klemmeinrichtungen dann zumindest etwas oder vollständig gelöst und nach Verstellung wieder festgeklemmt werden.

Dadurch, dass im Wesentlichen alle, die Einstellfunktion erfüllenden Vorrichtungselemente oberhalb der Banddurchlaufebene angeordnet sind, wird ein weiterer erheblicher Vorteil gegenüber dem Stand der Technik erreicht, nämlich dass die beim Schaben anfallenden Späne ungehindert durch mechanische Teile der Schwerkraft folgend nach unten abgeführt werden können. Bei den Vorrichtungen des Standes der Technik besteht ständig die Gefahr, dass sich Späne im Bearbeitungsbereich verheddern, was notwendig macht, den Bearbeitungsvorgang zu unterbrechen, um die Späne zu entfernen. Die Gefahr eines dadurch bedingten Unterbrechens des Arbeitsvorgangs wird somit Vermieden.

Die vorliegende Erfindung hat auch ein Verfahren zum Laserschweißen von bandförmigem Material gleicher oder unterschiedlicher Dicke zum Gegenstand, bei dem das Bandmaterial von wenigstens einem Coil abgewickelt wird. Das abgewickelte Bandmaterial wird danach gegebenenfalls einer Richtmaschine zugeführt und von dieser gerichtet und anschließend wird eine Bandmaterialschlinge oder -schlaufe gebildet, die als Puffer für die nachfolgenden Bearbeitungsstationen dient. Bei dem erfindungsgemäßen Verfahren wird wenigstens ein Seitenrand des Bandmaterials einem Seitenrandschabeschritt unterworfen und anschließend in einer Laserschweißanlage verschweisst, wobei das Schabewerkzeug während des Betriebs in seiner Position verändert werden kann. Die vom Werkzeug nicht bearbeitete Kante wird bei einseitigem Schaben durch eine drehbare Rolle geführt.

Vorteilhafterweise wird dadurch ein kontinuierliches Laserschweißen des bandförmigen Materials ermöglicht, da abgenutzte Bereiche der Schabewerkzeuge während des Betriebs durch nicht abgenützte Bereiche ersetzt werden können und damit ein kontinuierlich gutes Schweißergebnis ermöglicht wird.

Weiterhin weist das erfindungsgemäße Verfahren vorteilhafterweise vor dem Schritt des Seitenrandschabens einen Anwalzschritt wenigstens eines der Seitenränder desjenigen Bandmaterials auf, das gegenüber dem zu verschweißenden weiteren Bandmaterial eine größere Dicke aufweist. Dadurch wird ein erheblich besseres Schweißergebnis erreicht, da der Dickenunterschied der zu verschweißenden Materialien verringert wird.

Bei besonders hohen Anforderungen der Maßgenauigkeit der zu verarbeitenden Bandmaterialien können gemäß dem erfindungsgemäßen Verfahren auch mehrerer hintereinander angeordnete Bandschabevorrichtungen verwendet werden. Beispielsweise wird in einer ersten Bandschabevorrichtung eine "Schruppbearbeitung" durchgeführt und in einer darauffolgenden Bandschabevorrichtung eine "Schlichtbearbeitung".

Die erfindungsgemäße Bandschabeeinrichtung benötigt keinen eigenen Antrieb zur Bandmaterialförderung, sondern wird dies durch die Antriebseinrichtungen der Laserschweißanlage bewerkstelligt.

Zur Herstellung der Tailored Strips sind mehrere Bandmaterialien notwendig. Jedes Bandmaterial wird in einer eigens dafür vorgesehenen Bandschabevorrichtung bearbeitet. Jede Bandschabevorrichtung ist dabei ortsfest in der Gesamtanlage angeordnet. Mehrere Bandschabevorrichtungen sind dabei gegebenenfalls höhenversetzt angeordnet. In der Regel wird das Bandmaterial mittig in jede Bandschabevorrichtung eingeführt. Wenn jedoch beispielsweise die Breite des mittleren Bandmaterials größer wird, kann es notwendig sein, daß das oder die seitlichen Bandmaterialien seitlich versetzt werden und in ihren Bandschabevorrichtungen, da diese ortsfest sind, nicht mehr mittig sondern seitenversetzt bearbeitet werden. Durch die einfache Ausgestaltung der Werkzeugschlitten-Bewegungseinrichtungen können die Werkzeugschlitten auf sehr einfache Weise diesen Bedingungen angepaßt werden.

Weitere Einzelheiten, Merkmale und Vorteile der vorliegenden Erfindung ergeben sich aus der nachfolgenden Beschreibung unter Bezugnahme auf die beigefügten Zeichnungen. Darin zeigt:
- Figur 1:: eine schematische Vorderansicht auf eine Bandschabevorrichtung der vorliegenden Erfindung;
- Figur 2:: eine Seitenansicht der Bandschabevorrichtung von Figur 1;
- Figur 3:: eine schematische Draufsicht auf die Bandschabevorrichtung von Figur 1;
- Figur 4:: eine schematische Detailansicht des Werkzeugschlittens der erfindungsgemäßen Bandschabevorrichtung in einer alternativen Ausführungsform und zwar in Aufsicht;
- Figur 5:: eine Vorderansicht des Werkzeugschlittens von Figur 4;
- Figur 6:: eine Seitenansicht des Werkzeugschlittens von Figur 4;
- Figur 7:: in vergrößertem Maßstab eine Draufsicht auf den Werkzeugschlitten gemäß Fig. 1;
- Figur 8:: eine Seitenansicht der Ausführungsform von Figur 7;
- Figur 9: eine Draufsicht auf eine weitere alternative Ausführungsform des Werkzeugschlittens der erfindungsgemäßen Bandschabevorrichtung;
- Figur 10:: eine weitere alternative Ausführungsform des Werkzeugschlittens in Vorderansicht;
- Figur 11:: eine Seitenansicht der Ausführungsform von Figur 10;
- Figur 12:: eine Draufsicht auf die Ausführungsform von Figur 10.

In den Figuren sind gleiche Teile und Elemente mit gleichen Bezugsziffern bezeichnet.

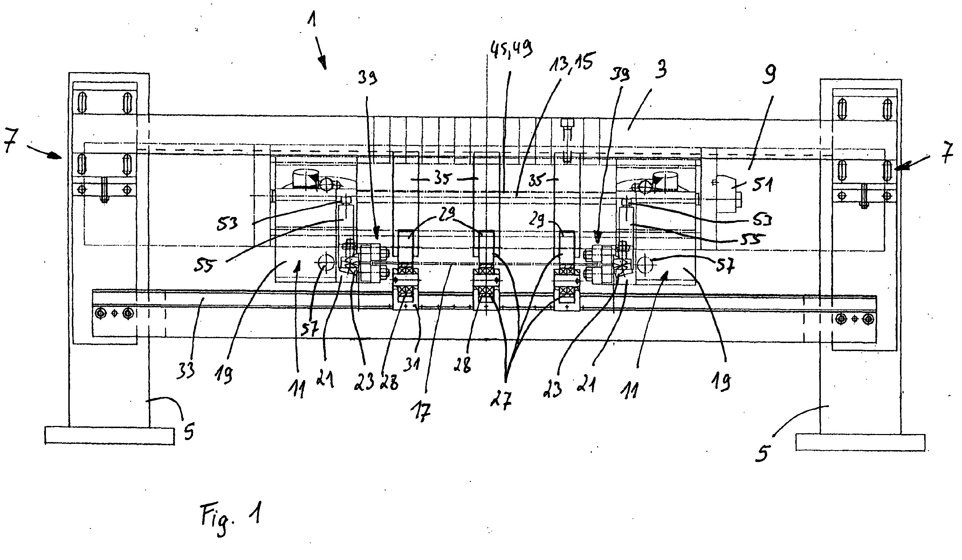

In Figur 1 ist eine erfindungsgemäße Bandschabevorrichtung 1 in Vorderansicht und schematisch dargestellt. Die Bandschabevorrichtung 1 weist einen Querträger 3 und an jedem seiner Enden einen Stützträger 5 auf. Der Querträger 3 ist an den Stützträgern 5 höhenverstellbar bei 7 angeordnet.

Die erfindungsgemäße Bandschabevorrichtung 1 weist zwei Werkzeugschlitten 11 auf, die, wie aus Figur 1 ersichtlich, symmetrisch aufgebaut sind. Die Werkzeugschlitten sind jeweils auf einer linearen Schlittenführung 13 bzw. 15 angeordnet, die Teil einer Schlittenführung 9 sind, die mit dem Querträger 3 verbunden ist. Aufgrund dieser Anordnung sind die Werkzeugschlitten 11 parallel zum Querträger 3 und senkrecht zur Förderrichtung eines Bandmaterials 17 bewegbar.

Jeder Werkzeugschlitten 11 weist eine Werkzeugaufnahmeeinrichtung 19 auf, die zur Halterung eines Werkzeugträgers 21 dient, der seinerseits das Werkzeug 23, wie in Figur 1 deutlich dargestellt, einen Schneidstahl 23, aufweist. Der Schneidstahl 23 ist in Figur 1 in zwei verschiedenen Bearbeitungsstellungen dargestellt.

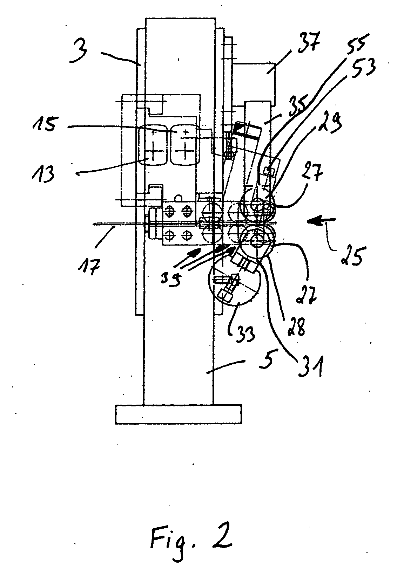

Wie aus Figuren 1 bis 3 ersichtlich, sind für das Führen des Bandmaterials 17 auf der Bandeinlaufseite gemäß Pfeil 25 Führungsrollenpaare 27 vorgesehen, im dargestellten Ausführungsbeispiel insgesamt drei Führungsrollenpaare 27. Die unteren Führungsrollen 28 sind über einen Träger 31 mit einem quer verlaufenden Stützbalken 33 verbunden. Die oberen Führungsrollen 29 der Führungsrollenpaare 27 sind über Träger 35 mit einem Stützbalken 37 verbunden, der parallel zum Stützbalken 33 verläuft und ebenfalls zur Aufnahme von vom Bandmaterial 17 aufgebrachten Kräften dient.

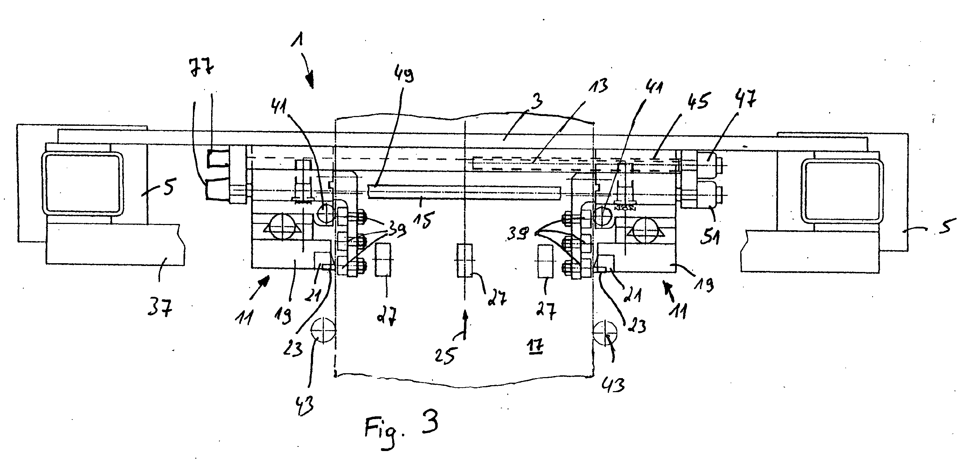

Wie aus den Figuren 1 bis 3 weiterhin ersichtlich, sind im Bearbeitungsbereich und anschließend daran drehbare Rollenpaare 39 vorgesehen, zwischen denen sich das Bandmaterial 17 hindurchbewegt. In Förderrichtung des Bandmaterials 17 nach der Bearbeitung durch das Werkzeug 23 ist eine seitliche Führungsrolle 41 vorgesehen, wie insbesondere aus Figur 3 ersichtlich. Die Führungsrolle 41 ist dabei kontinuierlich mittels einer exzentrischen Lagerung feinjustierbar ausgebildet.

Auf der Bandeinlaufseite sind weiterhin seitliche Führungsrollen 43 vorgesehen, die ebenso wie die Führungsrollen 41 auf einer Achse angeordnet sind, die senkrecht zur Förderrichtung (Pfeil 25) des Bandmaterials 17 liegen.

Nachfolgend wir nunmehr der Mechanismus der Bewegungsmöglichkeiten der Werkzeugschlitten 11 beschrieben. Wie insbesondere aus Figur 3 ersichtlich, ist der rechte Werkzeugschlitten 11 mit einer linearen Schlittenführung 13 verbunden derart, dass beim Drehen einer Gewindespindel 45, beispielsweise an der Lagerung 47 mit Hilfe eines entsprechenden Eingriffselements (nicht dargestellt) der Werkzeugschlitten linear bewegbar ist.

Ähnlich ist die Bewegungseinrichtung des linken Werkzeugschlittens 11 aufgebaut, wobei dieser mit Hilfe einer Gewindespindel 49, die über die Lagerung 51 drehbar ist, ebenfalls bewegbar ist. Die Betätigung der Gewindespindel 45 und 49 ist unabhängig voneinander, so dass die Werkzeugschlitten 11 entsprechend beliebige Positionen anfahren können.

Eine Linearbewegung des Werkzeugträgers 21 und damit des Werkzeugstahls 23 wird mittels einer über ein Handrad 53 betätigbaren Bewegungseinrichtung 55 ermöglicht. Durch Drehen des Handrads 53 in die eine Richtung bewegt sich der Werkzeugträger 21 nach unten und bei Umkehrung der Drehbewegung entsprechend nach oben. Insbesondere kann der Werkzeugträger 21 während des Betriebs der erfindungsgemäßen Bandschabevorrichtung 1 in seiner Position linear nach unten oder oben verschoben werden, wobei sich der Eingriffsbereich des Schneidstahls 23 am Bandmaterial 17 lokal nicht ändert. Dadurch ergibt sich besonders vorteilhaft die Möglichkeit, abgenutzte Schneidflächen des Schneidstahls 23 im Betrieb durch neue Abschnitte ersetzen zu können, ohne dass dabei die Bearbeitung des Bandmaterials 17 unterbrochen werden muss.

Die Werkzeugaufnahmeeinrichtung 19 ist weiterhin um eine Achse oder Welle 57 verschwenkbar. Diese Welle 57 verläuft parallel zur Bandförderrichtung. Durch Verschwenken der Werkzeugaufnahmeeinrichtung 19 in die eine oder die andere Richtung, kann eine entsprechende Neigung der Schneidfläche des Schneidwerkzeugs 23 eingestellt werden. Dies ist insbesondere für das Aufbringen eines "V"förmigen Schweissnahtbereichs auf das Bandmaterial, das anschließend entsprechend zu einem Rohrkörper umgeformt wird, von Vorteil.

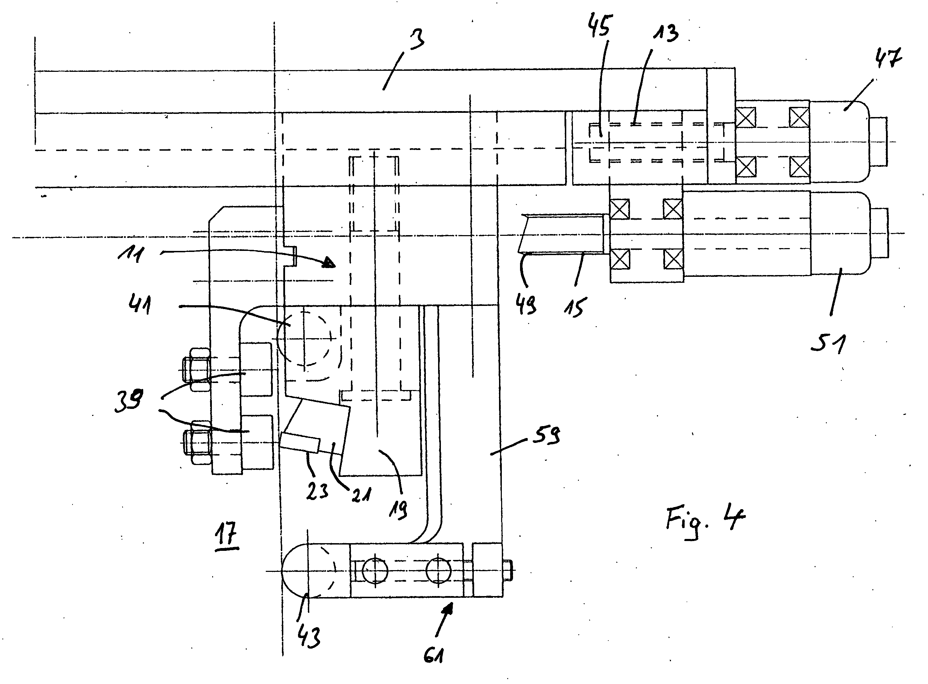

Figur 4 zeigt eine alternative Ausführungsform der erfindungsgemäßen Bandschabevorrichtung. Wie aus Figur 4 ersichtlich, ist die vordere seitliche Führungsrolle 43 einstellbar an einem Arm 59 gelagert. Die Einstellung der Position der vorderen seitlichen Führungsrolle 43 erfolgt über eine Einstelleinrichtung 61. In dieser alternativen Ausführungsform sind nur zwei drehbare Rollenpaare 39 vorgesehen.

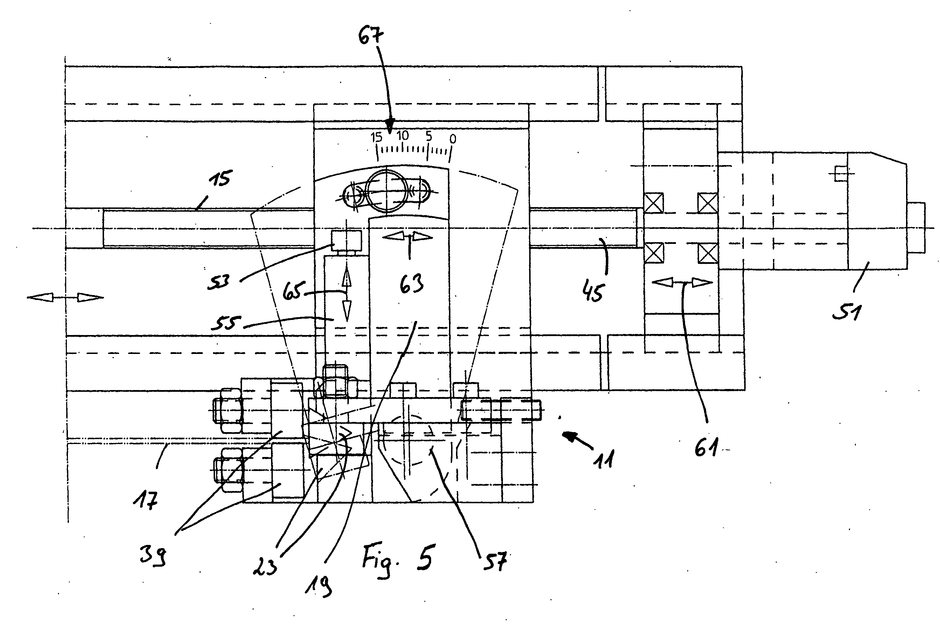

In Figur 5 ist eine Vorderansicht des Werkzeugschlittens von Figur 4 dargestellt. Die Bewegungsmöglichkeiten des Werkzeugschlittens 11 sind durch den Doppelpfeil 61 angegeben, also entlang der linearen Schlittenführung 15. Die Bewegungsmöglichkeiten des Werkzeugträgers 21 und damit des Werkzeugschneidstahls 23 sind mit dem Doppelpfeil 65 angegeben. Die Bewegung der Werkzeugaufnahmeeinrichtung 19, die um die Welle 57 schwenkt, ist durch den Doppelpfeil 63 angegeben. Eine Einstellskala 67 gibt der Bedienungsperson die entsprechende Winkelstellung der Werkzeugaufnahmeeinrichtung 19 an. Es wird darauf hingewiesen, dass der Schneidstahl 23 in der Darstellung in Figur 5 in zwei verschiedenen Positionen dargestellt ist.

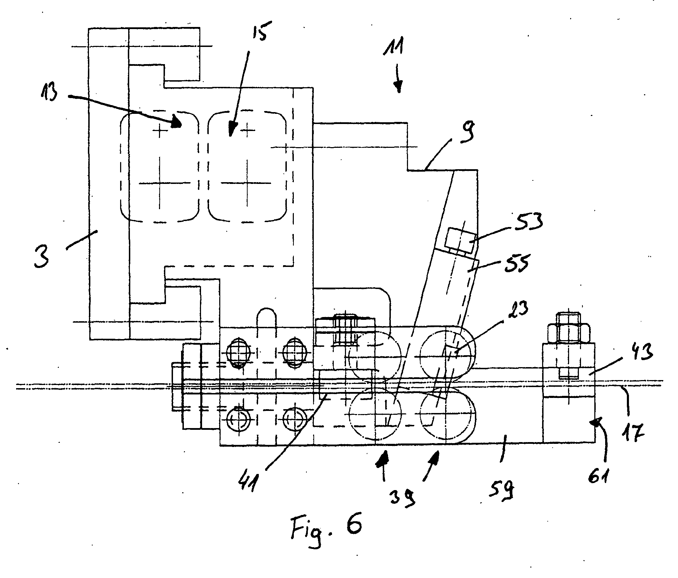

In Figur 6 ist eine Seitenansicht auf den Werkzeugschlitten 11 von Figur 4 dargestellt. Insbesondere ist hier wiederum deutlich der Eingriffsbereich des Schneidstahls 23 mit dem Bandmaterial 17 dargestellt. In dieser Ausführungsform ist die lineare Bewegungsrichtung bezüglich einer vertikalen Achse zum horizontal verlaufenden Bandmaterial 17 leicht geneigt dargestellt. Es ist ersichtlich, dass durch Bewegung des Schneidstahls 23 nach unten stets die selbe Eingriffsposition des bearbeiteten Schneidstahlabschnitts in Bezug auf das Bandmaterial 17 erreicht ist. Durch Drehen des Handrads 53 kann somit der Schneidstahl in eine entsprechende Position versetzt werden, ohne dass die Bearbeitung des Bandmaterials 17 unterbrochen werden müsste.

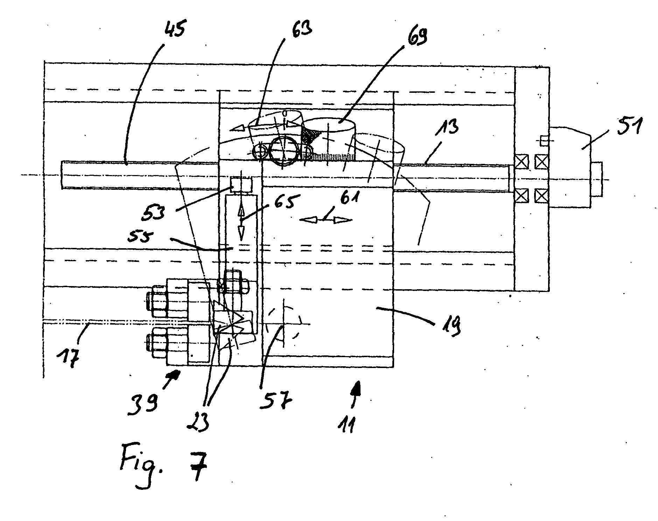

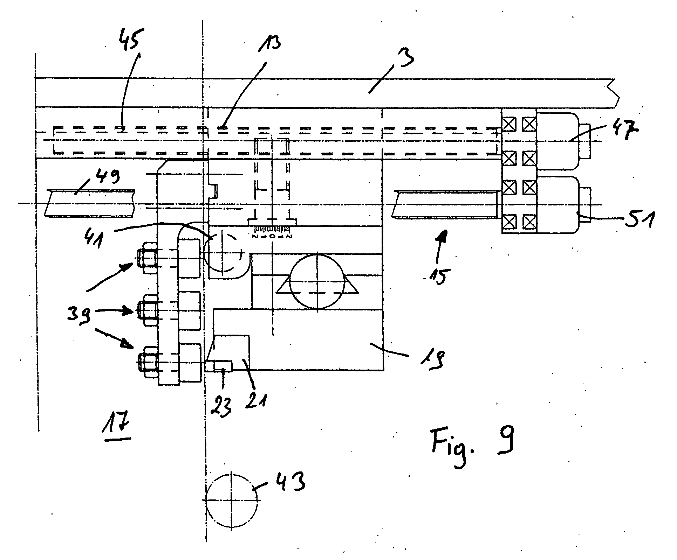

Die Figuren 7 bis 9 sind vergrößerte Darstellungen des rechten Werkzeugschlittens von Figur 1 sowie von dessen Längsführung. Wie aus Figur 7 ersichtlich, kann durch Drehen eines Handrads 69 ein Verschwenken der Werkzeugaufnahmeeinrichtung 19 erfolgen. Die durchgezogene senkrechte Stellung des Handrads 69 entspricht der geraden, senkrechten Stellung des Schneidstahls 23. Die linke strichpunktierte Stellung des Handrads 69 entspricht der strichpunktierten Stellung des Schneidstahls 23. Weiterhin kann die Werkzeugaufnahmeeinrichtung 19 auch entsprechend nach rechts verschwenkt werden, wie strichpunktiert dargestellt. Eine entsprechende Stellung des Schneidstahls ist aus Übersichtsgründen hier nicht angegeben.

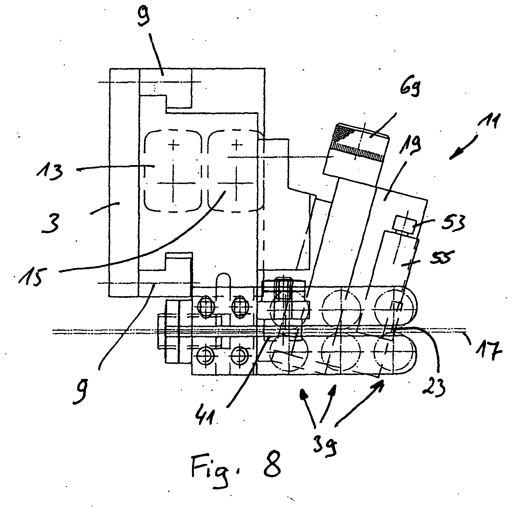

In Figur 8 ist die Seitenansicht dieser Ausführungsform des Werkzeugschlittens dargestellt. Die gesamte Werkzeugaufnahmeeinrichtung 19 ist leicht nach vorn geneigt, somit auch das Handrad 69. Weiterhin ist die deutlich die Ausgestaltung der Schlittenführung 9 dargestellt, die ein oben und unten übergreifendes Profil aufweist.

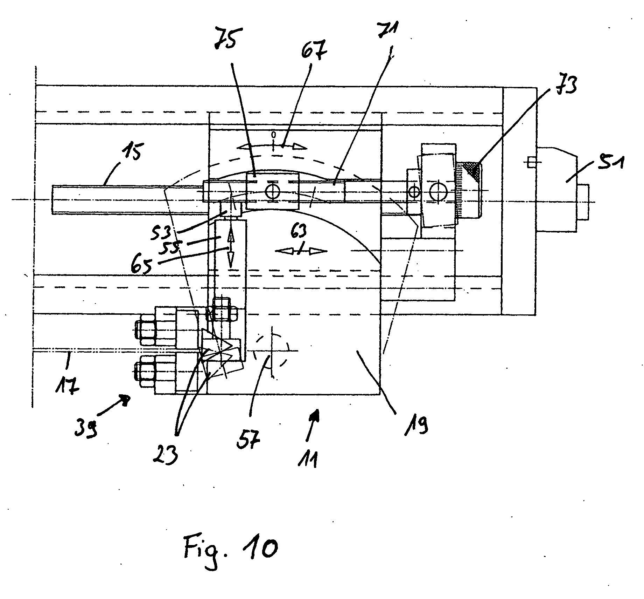

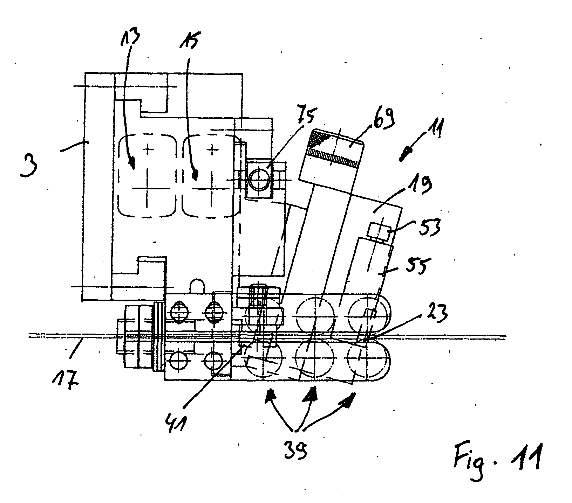

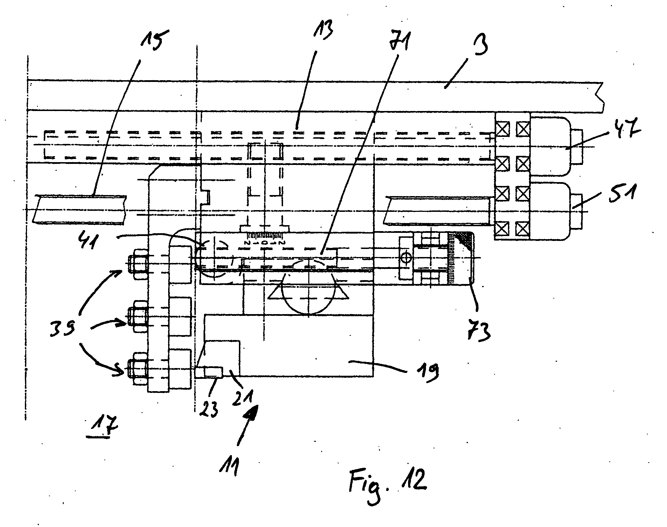

In den Figuren 10 bis 12 ist eine weitere alternative Ausführungsform dargestellt, die insbesondere einen speziellen Schwenkmechanismus zeigen. Mittels einer drehbaren Gewindestange 71, die über ein Handrad 73 betätigt werden kann und in Eingriff steht mit einer Gewindehülse 75, die wiederum in Eingriff steht mit der Werkzeugaufnahmeeinrichtung 19, kann die Werkzeugaufnahmeeinrichtung auch während des Betriebes verschwenkt werden, so dass beispielsweise die beiden Stellungen des Schneidstahls 23 gemäß Figur 10 eingestellt werden können. Die Figuren 11 und 12 zeigen weiterhin die räumliche Anordnung des Verschwenkmechanismus von Figur 10.

Wie weiterhin aus Figur 3 ersichtlich, sind an den linearen Schlittenführungen 13 und 15 Hydraulikeinrichtungen 77 angebracht, die auf die Werkzeugschlitten 11 gegenläufig einwirken. Durch Druckbeaufschlagung werden die beiden Werkzeugschlitten schlagartige voneinander entlang der linearen Schlittenführungen 13 und 15 bewegt, was einem sogenannten Lüften entspricht.

In einer bevorzugten Ausführungsform sind die oberen Führungsrollen 29 zusammen mit ihren Trägern 35 dadurch "lüftbar", daß der obere Stützbalken 37 beispielweise mittels hydraulischer Beaufschlagung vertikal nach oben bewegt wird.

Alternativ können die unteren Führungsrollen 28 zusammen mit dem jeweiligen Träger 31 mittels des drehbaren Stützbalkens 33 lüftbar sein, d. h. durch Drehen des Stützbalkens werden die unteren Führungsrollen abgesenkt und auch damit das Bandmaterial 17, so dass bei Dickenänderungen des Bandmaterials 17 Beschädigungen der Bandschabevorrichtung vermieden werden können.

Der Antrieb des Bandmaterials 17 erfolgt über entsprechende hinter der Bandschabevorrichtung angeordneter Walzenantriebe, die beispielsweise bei der nachgeschalteten Bearbeitungsmaschine vorhanden sind.

Alle Verstellungen bzw. beweglichen Elemente der Verstellungen werden mittels geeigneter Klemmeinrichtungen geklemmt. Das gilt insbesondere für die Position der Werkzeugschlitten 11.

Die vorliegende Erfindung ist nicht auf die dargestellten Ausführungsformen beschränkt. So können beispielsweise die von Hand betätigbaren Verstelleinrichtungen durch motorisch betriebene Verstelleinrichtungen ganz oder teilweise ersetzt werden.

Weiterhin können anstelle der Rollenführungen auch durch geeignete Gleitführungen eingesetzt werden. Schließlich kann auch eine Späneausblaseeinrichtung zusätzlich vorgesehen sein, mit der anfallende Späne nach unten ausgeblasen werden können.

## Patentansprüche

1. Vorrichtung zum Bearbeiten, insbesondere Schaben der Ränder von, insbesondere gewalztem und von wenigstens einem Coil abgewickelten, Bandmaterial (17) insbesondere für die Erzeugung einer für ein Laserschweißen geeigneten Bandkante,
mit einem Querträger (3) und je einem an jedem Ende des Querträgers (3) angeordneten seitlichen Stützträger (5), wobei der Querträger (3) eine lineare Schlittenführung (13, 15) zum linearen Führen von wenigstens einem Werkzeugschlitten (11) aufweist, wobei der wenigstens eine Werkzeugschlitten (11) eine Werkzeugaufnahmeeinrichtung (19) aufweist, die zur Halterung eines Werkzeugträgers (21) dient,
mit einer Bandführung (43) auf der Bandmaterialeinlaufseite und einer Bandführung (41) auf der Bandmaterialauslaufseite, wobei das Werkzeug eine Schneidplatte (23) ist, und wobei der Werkzeugträger (21) zusammen mit dem Werkzeug linear und während des Betriebs bewegbar ist.

2. Bandschabevorrichtung nach Anspruch 1, **dadurch gekennzeichnet, dass** zwei Werkzeugschlitten (11) mit Werkzeugaufnahmeeinrichtung (19), Werkzeugträger (21) und Werkzeug (23) vorgesehen sind.

3. Bandschabevorrichtung nach Anspruch 2, **dadurch gekennzeichnet, dass** die beiden Werkzeugaufnahmeeinrichtungen (19) auf einer Achse angeordnet sind, die senkrecht zur Bandmaterial-Förderrichtung (25) verläuft.

4. Bandschabevorrichtung nach einem der Ansprüche 1 bis 3, **dadurch gekennzeichnet, dass** zur Einstellung des Schabwinkels die Werkzeugaufnahmeeinrichtung (19) um eine Achse verschwenkbar ist, die parallel zur Bandmaterial-Förderrichtung (25) verlaufen.

5. Bandschabevorrichtung nach einem der Ansprüche 1 bis 4, **dadurch gekennzeichnet, dass** die Einstellung des Schabwinkels während des Betriebs der Vorrichtung erfolgen kann.

6. Bandschabevorrichtung nach einem der Ansprüche 1 bis 5, **dadurch gekennzeichnet, dass** zur Seitenführung des Bandmaterials (17) wenigstens eine drehbare Seitenführungsrolle (41) je Bandmaterialseite vorgesehen ist, die gegen den bearbeiteten Seitenrand drückt.

7. Bandschabevorrichtung nach Anspruch 6, **dadurch gekennzeichnet, dass** zur Feinjustierung der Seitenführung die drehbare Rolle (41) exzentrisch gelagert ist.

8. Bandschabevorrichtung nach einem der Ansprüche 1 bis 7, **dadurch gekennzeichnet, dass** die Bandführung auf der Bandmaterialeinlaufseite wenigstens eine drehbare Führungsrolle (43) je Seite aufweist, die gegen den unbearbeiteten Seitenrand des Bandmaterials (17) drücken.

9. Bandschabevorrichtung nach einem der Ansprüche 1 bis 8, **dadurch gekennzeichnet, dass** zur Führung des Bandmaterials (17) im Bearbeitungsbereich wenigstens ein drehbares Rollenpaar (39) je zu bearbeitender Seite vorgesehen ist, wobei sich das Bandmaterial (17) zwischen den Rollen hindurchbewegt.

10. Bandschabevorrichtung nach einem der Ansprüche 1 bis 9, **dadurch gekennzeichnet, dass** zur Führung des Bandmaterials (17) auf der Bandmaterialeinlaufseite eine Mehrzahl von drehbaren Führungsrollenpaaren (27) vorgesehen ist, wobei sich das Bandmaterial zwischen den Rollen (28, 29) eines Führungsrollenpaares (27) bewegt.

11. Bandschabevorrichtung nach Anspruch 10, **dadurch gekennzeichnet, dass** jede Rolle (28, 29) eines Führungsrollenpaares (27) abgestützt ist.

12. Bandschabevorrichtung nach einem der Ansprüche 1 bis 11, **dadurch gekennzeichnet, dass** jeder Werkzeugschlitten (11) lüftbar ist.

13. Bandschabevorrichtung nach Anspruch 12, **dadurch gekennzeichnet, dass** das Lüften der Werkzeugschlitten (11) durch gegenläufige hydraulische Beaufschlagung erzeugt wird.

14. Bandschabevorrichtung nach einem der Ansprüche 10 bis 12, **dadurch gekennzeichnet, dass** wenigstens eine Rolle (28;29) eines Führungsrollenpaares (27) lüftbar angeordnet ist.

15. Bandschabevorrichtung nach einem der Ansprüche 1 bis 14, **dadurch gekennzeichnet, dass** im Wesentlichen alle Verstellungen klemmbar gebildet sind.

16. Bandschabevorrichtung nach Anspruch 15, **dadurch gekennzeichnet, dass** die Klemmung mechanisch oder hydraulisch erfolgt.

17. Bandschabevorrichtung nach einem der Ansprüche 1 bis 16, **dadurch gekennzeichnet, dass** im Wesentlichen alle, die Einstellfunktionen erfüllenden Vorrichtungselemente oberhalb der Banddurchlaufebene des Bandmaterials (17) angeordnet sind.

18. Verfahren zum Laserschweißen von bandförmigem Material gleicher oder unterschiedlicher Dicke, bei dem das Bandmaterial (17) von wenigstens einem Coil abgewickelt wird, das abgewickelte Bandmaterial gegebenenfalls einer Richtmaschine zugeführt und von dieser gerichtet wird, und anschließend eine Bandmaterialschlinge oder -schlaufe gebildet wird, **dadurch gekennzeichnet, dass** wenigstens ein Seitenrand des Bandmaterials (17) einem Seitenrandschabeschritt unterworfen wird und anschließend in einer Laserschweissanlage verschweisst wird, wobei das Schabewerkzeug während des Betriebs in seiner Position verändert werden kann.

19. Verfahren nach Anspruch 18, **dadurch gekennzeichnet, dass** vor dem Schritt des Seitenrandschabens ein Anwalzschritt wenigstens eines der Seitenränder desjenigen Bandmaterials durchgeführt wird, das gegenüber dem zu verschweißenden weiteren Bandmaterial eine größere Dicke aufweist.

20. Verfahren nach einem der Ansprüche 18 oder 19, **dadurch gekennzeichnet, dass** der Seitenrand bzw. die Seitenränder des Bandmaterials (17) in mehreren hintereinander angeordneten Bandschabvorrichtungen bearbeitet werden.
